# EUROPÄISCHE PATENTSCHRIFT

(11) **EP 1 926 071 B1**
(45) Veröffentlichungstag und Bekanntmachung des Hinweises auf die Patenterteilung: **05.12.2012**
(21) Anmeldenummer: 07017164.0
(22) Anmeldetag: 01.09.2007
(51) Int. Cl.: G08C 23/04, G01B 21/04, H04Q 9/00

(54) **Tastsystem**
Sensor system
Système tactile

(30) Priorität: 22.11.2006 DE 102006054978
(43) Veröffentlichungstag der Anmeldung: 28.05.2008
(73) Patentinhaber: Dr. Johannes Heidenhain GmbH, 83301 Traunreut (DE)
(72) Erfinder: Gröll, Klaus, 83329 Waging am See (DE); Eisenberger, Christian, 83324 Ruhpolding (DE)

(56) Entgegenhaltungen:
- DE-A1- 10 303 551

## Beschreibung

Die Erfindung betrifft ein Tastsystem, bestehend aus einem Tastkopf mit einem Taststift und einem Sende-Empfängerelement, wobei zwischen Tastkopf und dem Sende-Empfängerelement eine drahtlose Datenübertragung möglicht ist, gemäß dem Oberbegriff des Anspruchs 1. Ferner betrifft die Erfindung ein Verfahren zum Betreiben eines derartigen Tastsystems gemäß dem Anspruch 10.

Ein Tastsystem umfasst in der Regel einen mobilen Tastkopf und ein stationäres Sende-Empfängerelement. Der Tastkopf in Form eines Tastschalters mit einem auslenkbaren Taststift, der bei einer Auslenkung aus seiner Ruheposition oder bei einer Berührung des Taststifts ein Schaltsignal abgibt, wird insbesondere zur Positionsbestimmung von Werkstücken verwendet, die in Material bearbeitenden Maschinen, beispielsweise Werkzeugmaschinen, eingespannt sind. Unter der Ruheposition des Taststifts wird dabei eine Position verstanden, in welcher der Taststift keinen Kontakt mit dem anzutastenden Werkstück hat. Bei einem Kontakt des Taststifts mit dem Werkstück wird der Taststift aus seiner Ruheposition ausgelenkt und es wird mittels eines geeigneten Wandlers ein elektrisches Sensorsignal erzeugt, wenn die Auslenkung eine vorgegebene Tastschwelle überschreitet. Das elektrische Sensorsignal wird dann häufig in ein Infrarot-Signal umgewandelt, so dass auf diese Weise eine berührungs- und kabellose Signalübertragung an das Sende-Empfängerelement des Tastsystems erreicht wird.

In diesem Sende-Empfängerelement werden dann die Infrarot-Signale wieder in elektrische Signale umgewandelt. Das Sende-Empfängerelement des Tastsystems ist mit einer Auswerteeinheit verbunden, zu der die elektrischen Signale weitergeleitet und ausgewertet werden und schließlich beispielsweise zur Steuerung der Werkzeugmaschine bereitgestellt werden. Dort kann dann, basierend auf der gemessenen Position des betreffenden Werkzeugmaschinenteils, die Position des zu vermessenden Werkstücks bestimmt werden.

Aus der Offenlegungsschrift DE 103 03 551 A1 der Anmelderin ist ein Tastsystem der eingangs genannten Art bekannt, bei dem ein Startsignal von einem Sendeelement an einen Tastkopf gesendet wird, das die Bereitschaft des Tastkopfs für den Messbetrieb auslöst. Der meist mit einer Batterie betriebene Tastkopf benötigt in diesem Zustand vergleichsweise viel elektrische Energie. In diesem aktiven Zustand wird der Tastkopf wiederholt z. B. an verschiedenen Konturen eines Werkstücks herangefahren, so dass der Taststift bei jeder Berührung des Werkstücks entsprechende Schaltsignale auslöst. Nachdem der Messvorgang abgeschlossen ist, muss durch Senden eines Steuerbefehls der Tastkopf wieder deaktiviert und in einen Strom sparenden Stand-By-Zustand zurückversetzt werden.

Ferner sind Tastsysteme bekannt, bei welchem der Tastkopf durch eine Time-out-Funktion nach einer vorgegebenen Zeitspanne in den Stand-By-Zustand zurückversetzt wird.

Die bislang bekannten Ausführungen von Tastsystemen haben den Nachteil, dass häufig die Tastköpfe unnötig lange im aktiven Zustand des Messbetriebs sind und daher unnötig viel elektrische Energie verbrauchen.

Der Erfindung liegt daher die Aufgabe zugrunde, ein Tastsystem der eingangs genannten Art, bzw. ein Verfahren zu dessen Betrieb zu schaffen, welches insgesamt einen reduzierten Energieverbrauch des Tastkopfs ermöglicht.

Diese Aufgabe wird erfindungsgemäß durch die Merkmale des Anspruchs 1 bzw. des Anspruchs 10 gelöst.

Demnach umfasst das Tastsystem einen Tastkopf und ein Sende-Empfängerelement. Der Tastkopf weist einen Taststift und ein Sensorelement auf, wobei der Tastkopf vor dem eigentlichen Messbetrieb von einem passiven Zustand in einen aktiven Zustand überführbar ist. Im aktiven Zustand des Tastkopfs ist dann bei Berührung des Taststifts durch das Sensorelement im Tastkopf ein Sensorsignal erzeugbar. Der Tastkopf und das Sende-Empfängerelement sind derart konfiguriert, dass zwischen diesen eine drahtlose Datenübertragung in der Weise möglich ist, dass im aktiven Zustand im Tastkopf das Sensorsignal in ein Schaltsignal umwandelbar ist, welches im aktiven Zustand drahtlos vom Tastkopf zum Sende-Empfängerelement übertragbar ist. Während des aktiven Zustands ist ein Steuerbefehl drahtlos vom Sende-Empfängerelement fortlaufend an den Tastkopf übertragbar, wobei der aktive Zustand des Tastkopfs, ausgelöst durch den Empfang des vom Sende-Empfängerelement fortlaufend gesendeten Steuerbefehls, aufrechterhalten werden kann. Die Übertragung des Schaltsignals ist, bzw. der Tastkopf und das Sende-Empfängerelement sind, dabei so ausgestaltet, dass diese Übertragung kollisionsfrei bezüglich der Übertragung des Steuerbefehls durchführbar ist.

Unter dem Begriff passiver Zustand ist beispielsweise auch ein Stand-By-Zustand oder Sleep-Zustand des Tastkopfs zu verstehen.

Die Sensorelemente können beispielsweise als druckempfindliche Sensorelemente ausgestaltet sein. In diesem Fall wird praktisch ohne merklichen Auslenkweg von den Sensorelementen auf Grund von Druckänderungen an den Auflagerpunkten des Taststifts im Tastkopf ein Sensorsignal erzeugt. Alternativ dazu können auch optisch wirkende Sensorelemente verwendet werden, bei denen durch optische Bauteile am Taststift der Lichteinfall auf ein optoelektronisches Bauteil im Tastkopf verändert wird, so dass auf diese Weise ein Sensorsignal erzeugt wird.

Kollisionsfrei bedeutet im Folgenden, dass die Übertragung des Schaltsignals nicht durch die fortlaufende Übertragung des Steuerbefehls gestört wird, insbesondere ist eine einwandfreie Funktion des Tastsystems gewährleistet, auch wenn ein Schaltsignal mit einem Steuerbefehl zeitgleich zusammenfällt.

Mit Vorteil werden für die drahtlose Datenübertragung elektromagnetische Wellen, insbesondere Infrarot-Licht verwendet. Bei einer drahtlosen Datenübertragung mittels Infrarot-Licht sind von einer Infrarot-Lichtquelle, die jeweils am Tastkopf und am Sende-Empfängerelement angeordnet sind, Infrarot-Signale sendbar und durch optoelektronische Empfänger, die jeweils am Sende-Empfängerelement und am Tastkopf angeordnet sind, in elektrische Signale umwandelbar.

In einer bevorzugten Ausgestaltung der Erfindung ist das Tastsystem so konfiguriert, dass das vom Tastkopf gesendete Schaltsignal gleichzeitig mit dem Senden des Steuerbefehls vom Sende-Empfängerelement empfangen werden kann.

In weiterer Ausgestaltung der Erfindung sind der Tastkopf und das Sende-Empfängerelement derart konfiguriert, dass für die Übertragung des Steuerbefehls ein erster Übertragungskanal und für die Übertragung des Schaltsignals ein zweiter Übertragungskanal verwendbar ist. Mit Vorteil sind sowohl der Steuerbefehl als auch das Schaltsignal unter Verwendung von Trägerfrequenzen übertragbar, wobei die Trägerfrequenz zur Übertragung des Steuerbefehls unterschiedlich ist von der Trägerfrequenz zur Übertragung des Schaltsignals. Insbesondere ist es im Hinblick auf die Reduzierung des Energiebedarfs im Tastkopf vorteilhaft, wenn die Trägerfrequenz zur Übertragung des Steuerbefehls kleiner ist als die Trägerfrequenz zur Übertragung des Schaltsignals.

Mit Vorteil besteht der Steuerbefehl und / oder das Schaltsignal aus mindestens einer Bitfolge, wobei High-Bits durch die einhüllende Kurve mehrerer mit einer Trägerfrequenz wiederkehrenden elektromagnetischen Signale erzeugt werden, so dass also die Bits aus - mit einer Trägerfrequenz modulierten - Pulsen bestehen.

Im einfachsten Fall kann der fortlaufende Steuerbefehl aus einem kontinuierlich gesendeten High-Bit bestehen. Alternativ dazu kann der fortlaufende Steuerbefehl auch aus permanent wiederholt gesendeten Bit-Sequenzen bestehen, die u. U. durch kurze Pausen voneinander getrennt sind. Mit Vorteil betragen diese Pausen weniger als 10 s, insbesondere weniger als 1 s, vorteilhaft weniger als 0,1 s. Die Pausen sind jedenfalls so kurz bemessen, dass in dieser Zeit der Tastkopf nicht in den passiven Zustand zurückfallen kann.

Der Tastkopf und das Sende-Empfängerelement können so konfiguriert sein, dass die Übertragung des Steuerbefehls und des Schaltsignals mit Hilfe eines Zeitmultiplexverfahrens durchführt werden kann. Beim Zeitmultiplexverfahren werden sowohl die Steuerbefehle als auch die Schaltsignale über ein und denselben Kanal übertragen. Im Zeitmultiplexverfahren wird die Zeit in kleine Abschnitte unterteilt, in denen der Kanal entweder vom Tastkopf oder vom Sende-Empfängerelement zum Senden benutzt werden kann.

Die Kollisionsfreiheit kann demnach durch die Verwendung verschiedener Kanäle für die Datenübertragung hergestellt werden oder durch die Anwendung des Zeitmultiplexverfahrens.

In weiterer Ausgestaltung der Erfindung kann im Tastkopf das Sensorsignal auch während des Empfangs des Steuerbefehls, bzw. gleichzeitig mit dem Empfang des Steuerbefehls, erzeugt werden. Insbesondere wenn ein Zeitmultiplexverfahren angewendet wird, kann zunächst mit Hilfe eines Timers im Tastkopf eine Zeitdifferenz zwischen der Erzeugung des Sensorsignals und dem Absetzen eines Schaltsignals bestimmt und der Wert dieser Zeitdifferenz zur Ermöglichung eines Korrekturverfahrens an das Sende-Empfängerelement übertragen werden. In der Folgeelektronik, beispielsweise einer Numerischen Steuerung, kann dann die exakte Position auf Basis der Zeitdifferenz und der Bewegungsgeschwindigkeit des Tastkopfs zum Antastzeitpunkt mit Hilfe des Korrekturverfahrens berechnet werden.

In vorteilhafter Ausgestaltung der Erfindung sind der Tastkopf und das Sende-Empfängerelement derart konfiguriert, dass der Tastkopf durch Übertragung des Steuerbefehls vom passiven Zustand in den aktiven Zustand überführt werden kann. Demnach dient ein Befehl, nämlich der Steuerbefehl, dazu den Tastkopf zunächst in den aktiven Zustand zu überführen und dann diesen im aktiven Zustand zu halten. Die Erfindung umfasst aber auch Tastsysteme, bei denen zum Überführen des Tastkopfs vom passiven Zustand in den aktiven Zustand zunächst ein erster Steuerbefehl übertragen wird und zum Halten des Tastkopfs im aktiven Zustand ein zweiter Steuerbefehl übertragen wird.

Das erfindungsgemäße Verfahren zum Betreiben eines Tastsystems umfasst die Schritte: Überführen des Tastkopfs von einem passiven Zustand in einen aktiven Zustand vor dem Messbetrieb; Fortlaufendes drahtloses Übertragen eines Steuerbefehls während des aktiven Zustands vom Sende-Empfängerelement zum Tastkopf, wobei der aktive Zustand des Tastkopfs, ausgelöst durch den Empfang des vom Sende-Empfängerelement fortlaufend gesendeten Steuerbefehls, aufrechterhalten wird; Erzeugung eines Sensorsignals im aktiven Zustand durch Berührung des Taststifts und Umwandeln des Sensorsignals in ein Schaltsignal mit Hilfe einer Elektronik im Tastkopf; drahtloses Übertragen des Schaltsignals vom Tastkopf zum Sende-Empfängerelement in der Weise, dass dies kollisionsfrei bezüglich der Übertragung des Steuerbefehls durchgeführt wird.

Mit Vorteil wird vom Sende-Empfängerelement der fortlaufende Steuerbefehl auch gesendet, wenn sich der Tastkopf noch in seinem passiven Zustand befindet. Der fortlaufende Steuerbefehl löst dann zunächst das Überführen des Tastkopfs vom passiven Zustand in den aktiven Zustand aus, wobei danach durch den Steuerbefehl der aktive Zustand des Tastkopfs aufrechterhalten wird, ausgelöst durch den weiteren Empfang des fortlaufend gesendeten Steuerbefehls gleichen Typs.

Vorteilhafte Ausbildungen der Erfindung entnimmt man den abhängigen Ansprüchen.

Weitere Einzelheiten und Vorteile des erfindungsgemäßen Tastkopfs ergeben sich aus der nachfolgenden Beschreibung zweier Ausführungsbeispiele anhand der beiliegenden Figuren.

Es zeigen die
- Figur 1: ein Tastsystem in einer Seitenansicht während der Aktivierung des Tastkopfs,
- Figur 2: eine Detailansicht mit einem Sensorelement im Tastkopf,
- Figur 3: das Tastsystem, bei dem der Tastkopf, bzw. dessen Taststift, ein Werkstück berührt.

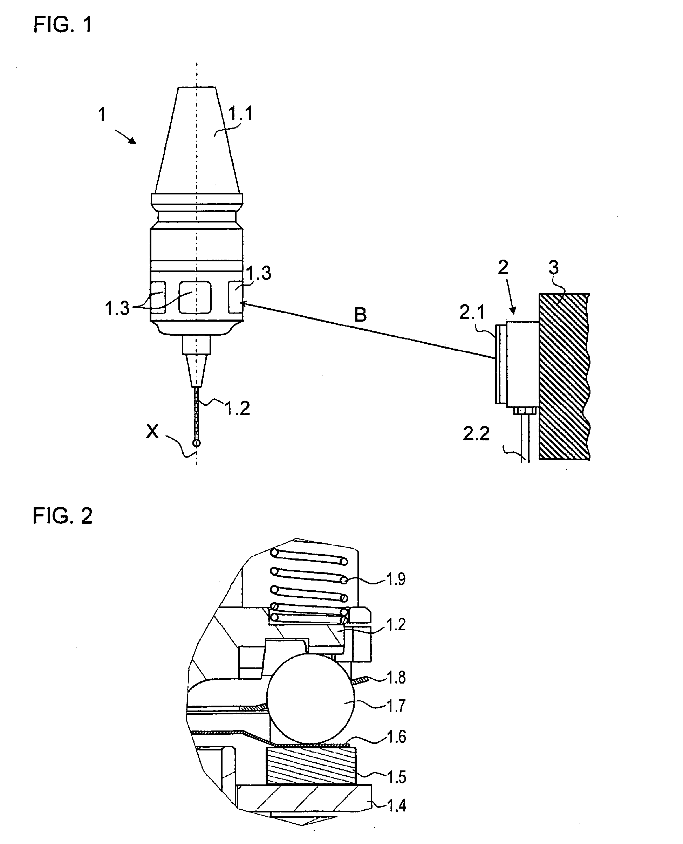

In der Figur 1 ist ein Tastsystem gezeigt, welches einen Tastkopf 1 und ein Sende-Empfängerelement 2 umfasst. Der Tastkopf 1 kann mittels eines Spannkonus 1.1 in eine Spindel einer Werkzeugmaschine eingespannt werden. Die Längsachse X des Tastkopfs 1 stellt gleichzeitig die Mittelachse des Spannkonus 1.1 dar. Parallel und konzentrisch zur Längsachse X ist am Tastkopf 1 ein zylindrischer Taststift 1.2 vorgesehen, welcher an einem Ende eine Antastkugel aufweist.

In der Figur 2 ist eine Teilansicht auf das Innere des Tastkopfs 1 gezeigt. Auf einer Leiterplatte 1.4 sind insgesamt drei druckempfindliche Sensorelemente 1.5 platziert, von denen in der Ansicht der Figur 2 nur eines zu sehen ist. Auf der Oberfläche jedes Sensorelements 1.5 ist jeweils eine Membran 1.6 angeordnet, die von jeweils einer Kugel 1.7 berührt wird, wobei die Kugeln 1.7 durch einen Halter 1.8 exakt an einer vorbestimmten Position relativ zu den Sensorelementen 1.5 fixiert.werden. Auf jeder Kugel 1.7 ruht ein Arm des Taststifts 1.2, vorgespannt durch jeweils eine Feder 1.9. Zur Energieversorgung des Tastkopfs 1 ist eine, in den Figuren nicht dargestellte, Batterie im Tastkopf 1 angeordnet.

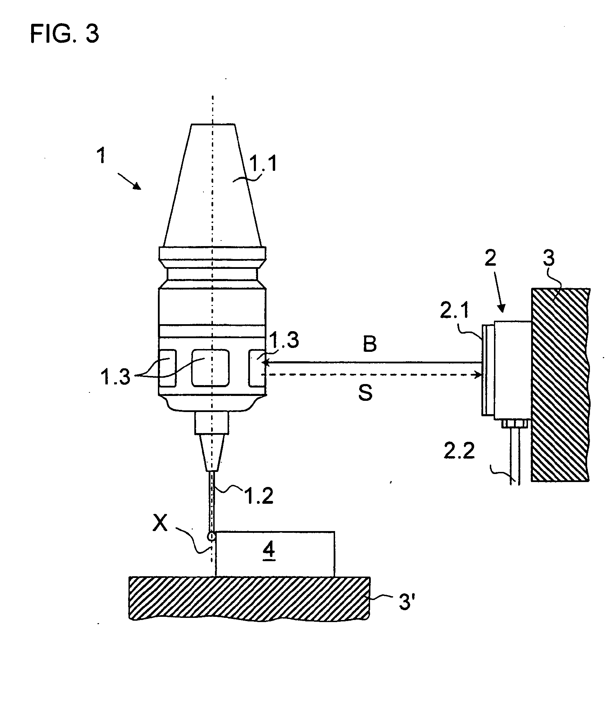

Ferner weist der Tastkopf 1 Sende- und Empfängereinheiten 1.3 auf, die wie in den Figuren 1 und 3 dargestellt, über dem Umfang des Tastkopfs 1 versetzt angeordnet sind. Im gezeigten Beispiel sind am Tastkopf 1 sechs Sende- und Empfängereinheiten 1.3 vorgesehen, die jeweils um 60° versetzt entlang einer Umfangslinie am Tastkopf 1 angeordnet sind.

Das Sende-Empfängerelement 2 ist im vorgestellten Beispiel an einem stationären Bauteil 3 der Werkzeugmaschine befestigt und weist ein für Infrarot-licht durchlässiges Fenster 2.1 auf, hinter dem eine Infrarot-Lichtquelle und ein optoelektronischer Empfänger angeordnet sind. Durch ein mehradriges Kabel 2.2 ist das Sende-Empfängerelement 2 zu dessen Energieversorgung am Stromnetz angeschlossenen und überdies mit einer Folgelektronik bzw. mit einer Numerischen Steuerung der betreffenden Werkzeugmaschine elektrisch verbunden.

Der Tastkopf 1 und das Sende-Empfängerelement 2 sind derart konfiguriert, dass zwischen diesen eine drahtlose Datenübertragung möglich ist, insbesondere können der Tastkopf 1 und das Sende-Empfängerelement 2 sowohl Infrarot-Signale senden als auch empfangen. Das Aussenden eines Infrarot-Signals vom Tastkopf 1 erfolgt mit Hilfe von den Sende- und Empfängereinheiten 1.3 zugeordneten Infrarot-Lichtquellen. Ebenso können in den Sende-Empfängereinheiten 1.3 des Tastkopfs 1 eingestrahlte Infrarot-Signale empfangen werden, die dann durch optoelektronische Empfänger in elektrische Signale umgewandelt werden.

Von der Infrarot-Lichtquelle des Sende-Empfängerelements 2 wird fortlaufend ein Steuerbefehl B in Form von Infrarotlichtimpulsen gesendet. Dabei besteht der Steuerbefehl B aus einer definierten Bitfolge. Die Infrarotlichtimpulse, aus denen sich der Steuerbefehl B zusammensetzt, werden zur Datenübertragung mit einer Trägerfrequenz f_{B} moduliert, welche hier 1024 Hz beträgt. Auch wenn das Sende-Empfängerelement 2 mit einer Numerischen Steuerung einer Werkzeugmaschine verbunden ist, kann das Auslösen des Sendens des Steuerbefehls B ohne Zutun der Numerischen Steuerung vorgenommen werden, wenn das Sende-Empfängerelement 2 entsprechend konfiguriert ist. Beispielsweise kann das Senden des Steuerbefehls B selbsttätig erfolgen, sobald die Netzspannung am Sende-Empfängerelement 2 anliegt. Dies kann einerseits die von der Numerischen Steuerung abzuarbeitenden Zyklen reduzieren, weil das Sende-Empfängerelement 2 hier von sich aus sendet, andererseits kann so ein Tastsystem geschaffen werden, dessen Kompatibilität zu verschiedenen Numerischen Steuerungen erhöht bzw. vereinfacht wird.

Häufig wird der Tastkopf 1 in einem Magazin einer Werkzeugmaschine gelagert, wobei er sich dann in einem passiven Zustand, etwa einem Stand-By-oder Sleep-Zustand befindet, in dem eine Berührung des Taststifts 1.2 keine Reaktion im Tastkopf 1 auslösen würde. Zur Ausführung von Messaufgaben wird der Tastkopf 1 automatisch aus dem Magazin entnommen und in die - in den Figuren nicht dargestellte - Spindel der Werkzeugmaschine eingespannt. Sobald der Tastkopf 1, der sich noch im passiven Zustand befindet, bei diesem Vorgang in den Sendebereich des Sende-Empfängerelements 2 gelangt, wird der Steuerbefehl B drahtlos vom Sende-Empfängerelement 2 zum Tastkopf 1 übertragen. Der Steuerbefehl B wird also im Sendebereich vom Tastkopf 1 empfangen. Durch den Empfang des Steuerbefehls B wird der Tastkopf 1 vom passiven Zustand in einen aktiven Zustand überführt, so dass ein Messbetrieb begonnen werden kann.

In diesem Messbetrieb wird der Tastkopf 1 innerhalb des Bearbeitungsraumes der Werkzeugmaschine verfahren oder um eine Achse, die orthogonal zur Längsachse X ausgerichtet ist, geschwenkt. Auch während sich der Tastkopf 1 in diesem aktiven Zustand befindet, wird fortlaufend der Steuerbefehl B vom Sende-Empfängerelement 2 gesendet. Der Empfang des fortlaufend gesendeten Steuerbefehls B im Tastkopf 1 hält diesen im aktiven Zustand, also im Messbetrieb.

In der Figur 3 ist eine Situation dargestellt, in welcher der Taststift 1.2 ein Werkstück 4, welches an einem Aufspanntisch 3' der Werkzeugmaschine befestigt ist, antastet. Im aktiven Zustand des Tastkopfs 1 wird von den Sensorelementen 1.5 ein Sensorsignal erzeugt, wenn der Taststift 1.2 beispielsweise die Außenkontur des zu vermessenden Werkstücks 4 berührt. Das Sensorsignal wird dann durch elektronische Bauteile auf der Leiterplatte 1.4 in ein Schaltsignal S umgewandelt. Dieses Schaltsignal S wird in Form eines Infrarot-Signals bestehend aus Infrarotlichtimpulsen erzeugt, wobei die Infrarotlichtimpulse gemäß einer vorgegebenen Bitfolge gesendet werden. Dabei sind die gesendeten Bitfolgen mit einer Trägerfrequenz f_{S}, welche hier 5 MHz beträgt, moduliert. Wenn also der Taststift 1.2 das Werkstück 4 berührt, sendet der Tastkopf 1 ein entsprechendes Schaltsignal S, so dass das Schaltsignal S vom Tastkopf 1 zum Sende-Empfängerelement 2 übertragbar ist. Gleichzeitig wird weiterhin der Steuerbefehl B von dem Sende-Empfängerelement 2 gesendet.

Das Sende-Empfängerelement 2 ist so konfiguriert, dass das Schaltsignal S mit der Trägerfrequenz f_{S} empfangen werden kann, auch wenn, wie im vorliegenden Fall, weiterhin von diesem fortlaufend der Steuerbefehl B mit der Trägerfrequenz f_{B} gesendet wird. Somit ist also die Übertragung des Schaltsignals S kollisionsfrei bezüglich der Übertragung des Steuerbefehls B durchführbar. Das in Form von Infrarotlichtimpulsen vom Sende-Empfängerelement 2 empfangene Schaltsignal S wird in elektrische Signale umgewandelt und aufbereitet. Letztlich gelangen die aufbereiteten elektrischen Signale über das Kabel 2.2 in eine ortsfeste Folgeelektronik, wo sie weiterverarbeitet werden. Die Folgeelektronik löst dann umgehend einen Stopp der Werkzeugmaschine aus, so dass der Tastkopf 1 relativ zum Werkstück 4 nicht mehr bewegt wird. Sodann wird die Position bestimmt, an welcher die Berührung des Werkstücks erfolgt ist. Üblicherweise verfügen Werkzeugmaschinen über genaue Messeinrichtungen, welche die Spindelposition bestimmen, so dass diese Messwerte für die Bestimmung der Berührposition verwendet werden.

Wenn nun der Messbetrieb beendet werden soll, wird der Tastkopf 1 automatisch aus der Spindel entnommen und in das Magazin transportiert. Dort ist er außerhalb der Reichweite des Steuerbefehls B, welcher nach wie vor fortlaufend vom Sende-Empfängerelement 2 gesendet wird. Nachdem nun der Steuerbefehl B vom Tastkopf 1 nicht mehr empfangbar ist, kann der Tastkopf 1 nicht mehr im aktiven Zustand gehalten werden und fällt somit automatisch in den passiven Zustand zurück, in welchem der Tastkopf 1 wesentlich weniger elektrische Energie benötigt, so dass die Standzeit der Batterie erhöht wird. Demzufolge ist der Tastkopf 1 nur so lange im aktiven Zustand, wie er sich im Bearbeitungsraum der Werkzeugmaschine befindet, so dass der durchschnittliche Energieverbrauch des Tastkopfs 1 wesentlich reduziert ist.

Alternativ dazu kann aber auch die Numerische Steuerung der Werkzeugmaschine den Steuerbefehl B auslösen, indem ein High-Signal von der Numerischen Steuerung an das Sende-Empfängerelement 2 über das Kabel 2.2 übertragen wird. Das High-Signal bewirkt dann, dass ab dessen Empfang im Sende-Empfängerelement 2 der Steuerbefehl B vom Sende-Empfängerelement 2 fortlaufend gesendet wird.

Gemäß einem zweiten Ausführungsbeispiel wird die Übertragung des Steuerbefehls B und des Schaltsignals S mit Hilfe eines Zeitmultiplexverfahrens durchführt.

Dabei wird dem Sende-Empfängerelement 2 für das Senden des fortlaufenden Steuerbefehls B nur ein bestimmter immer wiederkehrender erster Zeitabschnitt zugeordnet und dem Tastkopf 1 zum Senden des Schaltsignals S ein zweiter immer wiederkehrender Zeitabschnitt zugeordnet. Das Sende-Empfängerelement 2 und der Tastkopf 1 können dann jeweils nur in dem für sie vorgesehenem Zeitabschnitt den Steuerbefehls B bzw. das Schaltsignal S senden, wobei nun eine Verwendung von zwei Übertragungskanälen nicht mehr notwendig ist. Im vorgestellten Ausführungsbeispiel beträgt die Länge der Zeitabschnitte jeweils 1 ms. Der Tastkopf 1 ist so konfiguriert, dass dieser auf jeden Fall noch 4 ms nach Empfang der letzten Steuerbefehls B im aktiven Zustand verbleibt.

Wenn der Taststift 1.2 im aktiven Zustand das Werkstück 4 berührt, wird zunächst von den Sensorelementen 1.5 ein Sensorsignal erzeugt, das in ein Schaltsignal S umgewandelt wird zur drahtlosen Übertragung vom Tastkopf 1 zum Sende-Empfängerelement 2.

Sofern der Zeitpunkt der Übertragung in den Zeitabschnitt fällt, der ohnehin dem Tastkopf 1 zum Senden zugewiesen ist, sendet der Tastkopf 1 das Schaltsignal S kollisionsfrei an das Sende-Empfängerelement 2, wobei das Sende-Empfängerelement 2 den Steuerbefehl B in diesem Zeitabschnitt gerade nicht sendet.

Wenn allerdings der Zeitpunkt der Berührung des Werkstücks 4 durch den Taststift 1.2, bzw. die Erzeugung des Schaltsignals S, in den Zeitabschnitt fällt, welcher dem Sende-Empfängerelement 2 zum Senden des Steuerbefehls B zugewiesen ist, so wird das Absetzen des Schaltsignals S zurückgehalten. Gleichzeitig wird durch einen Timer im Tastkopf 1 eine Zeit t₁ festgehalten, zu der das Schaltsignal S zum Senden bereit gewesen wäre.

Sobald im Sende-Empfängerelement 2 das Senden des Steuerbefehls B unterbrochen ist, wird das Senden des Schaltsignals S vom Tastkopf 1 vorbereitet und gleichzeitig die aktuelle Zeit t₂ vom Timer im Tastkopf 1 festgehalten. Dann wird eine Zeitdifferenz Δt bestimmt, die sich aus den beiden festgehalten Zeiten errechnet (Δt = t₂ - t₁). Im vorgestellten Ausführungsbeispiel beträgt die Zeitdifferenz Δt aus den gemessenen Zeiten t₁, t₂ maximal 1,1 ms. Vom Tastkopf 1 wird dann unverzüglich das Schaltsignal S gesendet, zusammen mit dem Wert der Zeitdifferenz Δt. Vom Sende-Empfängerelement 2 wird das Schaltsignal S kollisionsfrei empfangen, so dass - wie im ersten Ausführungsbeispiel - letztlich ein Stopp der Werkzeugmaschine ausgelöst wird. Nun werden in der Steuerung der Werkzeugmaschine die aktuellen Positionskoordinaten der Spindel berechnet. Zur Erhöhung der Genauigkeit wird die Zeitdifferenz Δt in einem Korrekturverfahren in der Weise verwertet, dass unter Berücksichtigung der Bewegungsgeschwindigkeit der Spindel, der Zeitdifferenz Δt und der gemessenen Positionskoordinaten die Berührposition berechnet wird.

Alternativ dazu kann die Numerische Steuerung so konfiguriert sein, dass diese eine konstante Zeitverzögerung von beispielsweise 2 ms im Korrekturverfahren berücksichtigt. Wenn nun das Sende-Empfängerelement 2 einen Wert für die Zeitdifferenz Δt von beispielsweise 0,5 ms empfängt, so hält das Sende-Empfängerelement 2 das Absetzen der aufbereiteten elektrischen Signale über das Kabel 2.2 in eine ortsfeste Numerische Steuerung 1,5 ms lang zurück, so dass im Korrekturverfahren die vorgegebene konstante Zeitverzögerung mit der tatsächlichen Zeitverzögerung übereinstimmt. Zusätzlich können vom Sende-Empfängerelement 2 auch noch weitere Verzögerungszeiten berücksichtigt werden, z. B. Übertragungszeiten bei der Signalübertragung vom Sende-Empfängerelement 2 zur Numerischen Steuerung, so dass die Zurückhaltezeit entsprechend reduziert werden kann.

Die erforderliche vorgegebene konstante Zeitverzögerung wird bei einer anfänglichen Kalibrierung der gesamten Anordnung bestimmt.

## Patentansprüche

1. Tastsystem, umfassend
- einen Tastkopf (1), der einen Taststift (1.2) und ein Sensorelement (1.5) aufweist, wobei der Tastkopf (1) von einem passiven Zustand in einen aktiven Zustand überführbar ist, wobei im aktiven Zustand durch Berührung des Taststifts (1.2) durch das Sensorelement (1.5) ein Sensorsignal erzeugbar ist, sowie
- ein Sende-Empfängerelement (2), wobei
der Tastkopf (1) und das Sende-Empfängerelement (2) derart konfiguriert sind, dass zwischen diesen eine drahtlose Datenübertragung in der Weise möglich ist, dass im aktiven Zustand im Tastkopf (1) das Sensorsignal in ein Schaltsignal (S) umwandelbar ist, welches drahtlos vom Tastkopf (1) zum Sende-Empfängerelement (2) übertragbar ist, **dadurch gekennzeichnet, dass**
während des aktiven Zustands ein Steuerbefehl (B) drahtlos vom Sende-Empfängerelement (2) fortlaufend übertragbar ist, wobei der aktive Zustand des Tastkopfs (1), ausgelöst durch den Empfang des fortlaufend gesendeten Steuerbefehls (B), aufrechterhaltbar ist, und
die Übertragung des Schaltsignals (S) kollisionsfrei bezüglich der Übertragung des Steuerbefehls (B) durchführbar ist.

2. Tastsystem gemäß dem Anspruch 1, **dadurch gekennzeichnet, dass** gleichzeitig mit dem Senden des Steuerbefehls (B) das vom Tastkopf (1) gesendete Schaltsignal (S) vom Sende-Empfängerelement (2) empfangbar ist.

3. Tastsystem gemäß dem Anspruch 2, **dadurch gekennzeichnet, dass** der Tastkopf (1) und das Sende-Empfängerelement (2) derart konfiguriert sind, dass für die Übertragung des Steuerbefehls (B) ein erster Übertragungskanal und für die Übertragung des Schaltsignals (S) ein zweiter Übertragungskanal verwendbar ist.

4. Tastsystem gemäß dem Anspruch 2 oder 3, **dadurch gekennzeichnet, dass** sowohl der Steuerbefehl (B) als auch das Schaltsignal (S) unter Verwendung von Trägerfrequenzen (f_{B}, f_{S}) übertragbar sind, wobei die Trägerfrequenz (f_{B}) zur Übertragung des Steuerbefehls (B) unterschiedlich ist von der Trägerfrequenz (f_{S}) zur Übertragung des Schaltsignals (S).

5. Tastsystem gemäß dem Anspruch 4, **dadurch gekennzeichnet, dass** die Trägerfrequenz (f_{B}) zur Übertragung des Steuerbefehls (B) kleiner ist als die Trägerfrequenz (f_{S}) zur Übertragung des Schaltsignals (S).

6. Tastsystem gemäß dem Anspruch 1, **dadurch gekennzeichnet, dass** die Übertragung des Steuerbefehls (B) und des Schaltsignals (S) mit Hilfe eines Zeitmultiplexverfahrens durchführbar ist.

7. Tastsystem gemäß einem der vorhergehenden Ansprüche, **dadurch gekennzeichnet, dass** im Tastkopf (1) das Sensorsignal auch während des Empfangs des Steuerbefehls (B) erzeugbar ist.

8. Tastsystem gemäß den Ansprüchen 6 und 7, **dadurch gekennzeichnet, dass** der Tastkopf (1) einen Timer umfasst, so dass eine Zeitdifferenz (Δt) zwischen der Erzeugung des Sensorsignals und dem Absetzen eines Schaltsignals (S) bestimmbar ist, und diese Zeitdifferenz (Δt) zur Ermöglichung eines Korrekturverfahrens an das Sende-Empfängerelement (2) übertragbar ist.

9. Tastsystem gemäß einem der vorhergehenden Ansprüche, **dadurch gekennzeichnet, dass** der Tastkopf (1) durch Übertragung des Steuerbefehls (B) vom passiven Zustand in den aktiven Zustand überführbar ist.

10. Verfahren zum Betreiben eines Tastsystems, das einen Tastkopf (1) und ein Sende-Empfängerelement (2) aufweist, wobei der Tastkopf (1) einen Taststift (1.2) und ein Sensorelement (1.5) umfasst, mit folgenden Schritten:
- Überführen des Tastkopfs (1) von einem passiven Zustand in einen aktiven Zustand,
- Fortlaufendes drahtloses Übertragen eines Steuerbefehls (B) während des aktiven Zustands vom Sende-Empfängerelement (2), wobei der aktive Zustand des Tastkopfs (1), ausgelöst durch den Empfang des fortlaufend gesendeten Steuerbefehls (B), aufrechterhalten wird,
- Erzeugung eines Sensorsignals durch das Sensorelement (1.5) im aktiven Zustand durch Berührung des Taststifts (1.2) und Umwandeln des Sensorsignals in ein Schaltsignal (S),
- Drahtloses Übertragen des Schaltsignals (S) vom Tastkopf (1) zum Sende-Empfängerelement (2) in der Weise, dass dies kollisionsfrei bezüglich der Übertragung des Steuerbefehls (B) durchgeführt wird.

11. Verfahren gemäß dem Anspruch 10, **dadurch gekennzeichnet, dass** gleichzeitig mit dem Senden des Steuerbefehls (B) das vom Tastkopf (1) gesendete Schaltsignal (S) vom Sende-Empfängerelement (2) empfangen wird.

12. Verfahren gemäß dem Anspruch 10 oder 11, **dadurch gekennzeichnet, dass** für die Übertragung des Steuerbefehls (B) ein erster Übertragungskanal und für die Übertragung des Schaltsignals (S) ein zweiter Übertragungskanal verwendet wird.

13. Verfahren gemäß dem Anspruch 11 oder 12, **dadurch gekennzeichnet, dass** sowohl der Steuerbefehl (B) als auch das Schaltsignal (S) unter Verwendung von Trägerfrequenzen (f_{B}, f_{S}) übertragen werden, wobei die Trägerfrequenz (f_{B}) zur Übertragung des Steuerbefehls (B) unterschiedlich ist von der Trägerfrequenz (f_{S}) zur Übertragung des Schaltsignals (S).

14. Verfahren gemäß dem Anspruch 13, **dadurch gekennzeichnet, dass** die Trägerfrequenz (f_{B}) zur Übertragung des Steuerbefehls (B) kleiner ist als die Trägerfrequenz (f_{S}) zur Übertragung des Schaltsignals (S).

15. Verfahren gemäß dem Anspruch 10, **dadurch gekennzeichnet, dass** der Steuerbefehl (B) und das Schaltsignal (S) mit Hilfe eines Zeitmultiplexverfahrens übertragen werden.

16. Verfahren gemäß einem der Ansprüche 10 bis 15, **dadurch gekennzeichnet, dass** im Tastkopf (1) das Sensorsignal auch während des Empfangs des Steuerbefehls (B) erzeugt wird.

17. Verfahren gemäß einem der Ansprüche 15 und 16, **dadurch gekennzeichnet, dass** im Tastkopf (1) eine Zeitdifferenz (Δt) zwischen der Erzeugung des Sensorsignals und dem Absetzen eines Schaltsignals (S) bestimmt wird, und diese Zeitdifferenz (Δt) zur Ermöglichung eines Korrekturverfahrens an das Sende-Empfängerelement (2) übertragen wird.

18. Verfahren gemäß einem der Ansprüche 10 bis 17, **dadurch gekennzeichnet, dass** durch drahtloses Übertragen des Steuerbefehls (B) vom Sende-Empfängerelement (2) während des passiven Zustands des Tastkopfs (1) der Tastkopf (1) vom passiven Zustand in den aktiven Zustand überführt wird.

## Claims

1. Probe system comprising
- a probe head (1) having a stylus (1.2) and a sensor element (1.5), the probe head (1) being able to be transferred from a passive state to an active state, the sensor element (1.5) being able to generate a sensor signal in the active state as a result of the stylus (1.2) being touched, and
- a transceiver element (2),
the probe head (1) and the transceiver element (2) being configured in such a manner that data can be wirelessly transmitted between them in such a manner that, in the active state, in the probe head (1), the sensor signal can be converted into a switching signal (S) which can be wirelessly transmitted from the probe head (1) to the transceiver element (2), **characterized in that**
during the active state, a control command (B) can be continuously wirelessly transmitted by the transceiver element (2), the active state of the probe head (1), triggered by the reception of the continuously transmitted control command (B), being able to be maintained, and
the switching signal (S) being able to be transmitted without colliding with the transmission of the control command (B).

2. Probe system according to Claim 1, **characterized in that** the switching signal (S) transmitted by the probe head (1) can be received by the transceiver element (2) at the same time as the transmission of the control command (B).

3. Probe system according to Claim 2, **characterized in that** the probe head (1) and the transceiver element (2) are configured in such a manner that a first transmission channel can be used to transmit the control command (B) and a second transmission channel can be used to transmit the switching signal (S).

4. Probe system according to Claim 2 or 3, **characterized in that** both the control command (B) and the switching signal (S) can be transmitted using carrier frequencies (f_{B}, f_{S}), the carrier frequency (f_{B}) for transmitting the control command (B) being different from the carrier frequency (f_{S}) for transmitting the switching signal (S).

5. Probe system according to Claim 4, **characterized in that** the carrier frequency (f_{B}) for transmitting the control command (B) is lower than the carrier frequency (f_{S}) for transmitting the switching signal (S).

6. Probe system according to Claim 1, **characterized in that** the control command (B) and the switching signal (S) can be transmitted with the aid of a time-division multiplexing method.

7. Probe system according to one of the preceding claims, **characterized in that** the sensor signal can also be generated in the probe head (1) during the reception of the control command (B).

8. Probe system according to Claims 6 and 7, **characterized in that** the probe head (1) comprises a timer, with the result that it is possible to determine a time difference (Δt) between the generation of the sensor signal and the transmission of a switching signal (S), and this time difference (Δt) can be transmitted to the transceiver element (2) in order to enable a correction method.

9. Probe system according to one of the preceding claims, **characterized in that** the probe head (1) can be transferred from the passive state to the active state by transmitting the control command (B).

10. Method for operating a probe system having a probe head (1) and a transceiver element (2), the probe head (1) comprising a stylus (1.2) and a sensor element (1.5), with the following steps:
- the probe head (1) is transferred from a passive state to an active state,
- the transceiver element (2) continuously wirelessly transmits a control command (B) during the active state, the active state of the probe head (1), triggered by the reception of the continuously transmitted control command (B), being maintained,
- the sensor element (1.5) generates a sensor signal in the active state as a result of the stylus (1.2) being touched, and the sensor signal is converted into a switching signal (S),
- the switching signal (S) is wirelessly transmitted from the probe head (1) to the transceiver element (2) without colliding with the transmission of the control command (B).

11. Method according to Claim 10, **characterized in that** the switching signal (S) transmitted by the probe head (1) is received by the transceiver element (2) at the same time as the transmission of the control command (B).

12. Method according to Claim 10 or 11, **characterized in that** a first transmission channel is used to transmit the control command (B) and a second transmission channel is used to transmit the switching signal (S).

13. Method according to Claim 11 or 12, **characterized in that** both the control command (B) and the switching signal (S) are transmitted using carrier frequencies (f_{B}, f_{S}), the carrier frequency (f_{B}) for transmitting the control command (B) being different from the carrier frequency (f_{S}) for transmitting the switching signal (S).

14. Method according to Claim 13, **characterized in that** the carrier frequency (f_{B}) for transmitting the control command (B) is lower than the carrier frequency (f_{S}) for transmitting the switching signal (S).

15. Method according to Claim 10, **characterized in that** the control command (B) and the switching signal (S) are transmitted with the aid of a time-division multiplexing method.

16. Method according to one of Claims 10 to 15, **characterized in that** the sensor signal is also generated in the probe head (1) during the reception of the control command (B).

17. Method according to either of Claims 15 and 16, **characterized in that** a time difference (Δt) between the generation of the sensor signal and the transmission of a switching signal (S) is determined in the probe head (1), and this time difference (Δt) is transmitted to the transceiver element (2) in order to enable a correction method.

18. Method according to one of Claims 10 to 17, **characterized in that** the probe head (1) is transferred from the passive state to the active state by virtue of the transceiver element (2) wirelessly transmitting the control command (B) during the passive state of the probe head (1).

## Revendications

1. Système tactile, comprenant:
- une tête de sonde (1), qui présente une tige de sonde (1.2) et un élément capteur (1.5), dans lequel la tête de sonde (1) peut être amenée d'un état passif à un état actif, dans lequel, à l'état actif, un signal de capteur peut être produit par l'élément capteur (1.5) par contact de la tige de sonde (1.2), ainsi que
- un élément émetteur-récepteur (2), dans lequel
la tête de sonde (1) et l'élément émetteur-récepteur (2) sont configurés de telle manière qu'une transmission de données sans fil soit possible entre ceux-ci, d'une manière telle que, à l'état actif, le signal de capteur puisse être converti dans la tête de sonde (1) en un signal de commutation (S), qui peut être transmis sans fil de la tête de sonde (1) à l'élément émetteur-récepteur (2), **caractérisé en ce que** pendant l'état actif, une instruction de commande (B) peut être transmise en continu sans fil par l'élément émetteur-récepteur (2), dans lequel l'état actif de la tête de sonde (1), déclenché par la réception de l'instruction de commutation (B) envoyée en continu, peut être maintenu, et
la transmission du signal de commutation (S) peut être exécutée sans collision à l'égard de la transmission de l'instruction de commande (B).

2. Système tactile selon la revendication 1, **caractérisé en ce que**, simultanément à l'envoi de l'instruction de commande (B), le signal de commutation (S) envoyé par la tête de sonde (1) peut être reçu par l'élément émetteur-récepteur (2).

3. Système tactile selon la revendication 2, **caractérisé en ce que** la tête de sonde (1) et l'élément émetteur-récepteur (2) sont configurés de telle manière qu'un premier canal de transmission puisse être utilisé pour la transmission de l'instruction de commande (B) et qu'un deuxième canal de transmission puisse être utilisé pour la transmission du signal de commutation (S).

4. Système tactile selon la revendication 2 ou 3, **caractérisé en ce qu'**aussi bien l'instruction de commande (B) que le signal de commutation (S) peuvent être transmis en utilisant des fréquences porteuses (f_{B}, f_{S}), dans lequel la fréquence porteuse (f_{B}) pour la transmission de l'instruction de commande (B) est différente de la fréquence porteuse (f_{S}) pour la transmission du signal de commutation (S).

5. Système tactile selon la revendication 4, **caractérisé en ce que** la fréquence porteuse (f_{B}) pour la transmission de l'instruction de commande (B) est inférieure à la fréquence porteuse (f_{S}) pour la transmission du signal de commutation (S).

6. Système tactile selon la revendication 1, **caractérisé en ce que** la transmission de l'instruction de commande (B) et du signal de commutation (S) peut être effectuée à l'aide d'un procédé de multiplexage temporel.

7. Système tactile selon l'une quelconque des revendications précédentes, **caractérisé en ce que** le signal de capteur peut être produit dans la tête de sonde (1) même pendant la réception de l'instruction de commande (B).

8. Système tactile selon les revendications 6 et 7, **caractérisé en ce que** la tête de sonde (1) comprend une horloge, de telle manière qu'une différence de temps (Δt) entre la production du signal de capteur et l'envoi d'un signal de commutation (S) puisse être déterminée et que cette différence de temps (Δt) puisse être transmise à l'élément émetteur-récepteur (2) pour permettre un procédé de correction.

9. Système tactile selon l'une quelconque des revendications précédentes, **caractérisé en ce que** la tête de sonde (1) peut passer de l'état passif à l'état actif par la transmission de l'instruction de commande (B).

10. Procédé d'utilisation d'un système tactile, qui comprend une tête de sonde (1) et un élément émetteur-récepteur (2), dans lequel la tête de sonde (1) comporte une tige de sonde (1.2) et un élément capteur (1.5), présentant les étapes suivantes:
- faire passer la tête de sonde (1) d'un état passif à un état actif;
- transmettre sans fil en continu une instruction de commande (B) pendant l'état actif à partir de l'élément émetteur-récepteur (2), dans lequel l'état actif de la tête de sonde (1) déclenché par la réception de l'instruction de commande (B) envoyée en continu est maintenu,
- produire un signal de capteur par l'élément capteur (1.5) à l'état actif par contact de la tige de sonde (1.2) et convertir le signal de capteur en un signal de commutation (S),
- transmettre sans fil le signal de commutation (S) de la tête de sonde (1) à l'élément émetteur-récepteur (2) d'une manière telle que ceci puisse être effectué sans collision à l'égard de la transmission de l'instruction de commande (B).

11. Procédé selon la revendication 10, **caractérisé en ce que** le signal de commutation (S) envoyé par la tête de sonde (1) est reçu par l'élément émetteur-récepteur (2) simultanément à l'envoi de l'instruction de commande (B).

12. Procédé selon la revendication 10 ou 11, **caractérisé en ce que** l'on utilise un premier canal de transmission pour la transmission de l'instruction de commande (B) et un deuxième canal de transmission pour la transmission du signal de commutation (S).

13. Procédé selon la revendication 11 ou 12, **caractérisé en ce que** l'on transmet aussi bien l'instruction de commande (B) que le signal de commutation (S) en utilisant des fréquences porteuses (f_{B}, f_{S}), dans lequel la fréquence porteuse (f_{B}) pour la transmission de l'instruction de commande (B) est différente de la fréquence porteuse (f_{S}) pour la transmission du signal de commutation (S).

14. Procédé selon la revendication 13, **caractérisé en ce que** la fréquence porteuse (f_{B}) pour la transmission de l'instruction de commande (B) est inférieure à la fréquence porteuse (f_{S}) pour la transmission du signal de commutation (S).

15. Procédé selon la revendication 10, **caractérisé en ce que** l'on transmet l'instruction de commande (B) et le signal de commutation (S) à l'aide d'un procédé de multiplexage temporel.

16. Procédé selon l'une quelconque des revendications 10 à 15, **caractérisé en ce que** l'on produit le signal de capteur dans la tête de sonde (1) même pendant la réception de l'instruction de commande (B).

17. Procédé selon l'une des revendications 15 et 16, **caractérisé en ce que** l'on détermine dans la tête de sonde (1) une différence de temps (Δt) entre la production du signal de capteur et l'envoi d'un signal de commutation (S), et on transmet cette différence de temps (Δt) à l'élément émetteur-récepteur (2) pour permettre un procédé de correction.

18. Procédé selon l'une quelconque des revendications 10 à 17, **caractérisé en ce que** l'on fait passer la tête de sonde (1) de l'état passif à l'état actif par transmission sans fil de l'instruction de commande (B) à partir de l'élément émetteur-récepteur (2) pendant l'état passif de la tête de sonde (1).
